# FASCICULE DE BREVET EUROPEEN

(11) **EP 1 101 955 B1**
(45) Date de publication et mention de la délivrance du brevet: **09.08.2006**
(21) Numéro de dépôt: 00403254.6
(22) Date de dépôt: 22.11.2000
(51) Int. Cl.: F16B 5/00, C03C 27/12, B32B 17/10, E06B 3/663, B60J 1/00, F41H 5/04, F16S 1/00, F16B 5/06

(54) **Vitrage multiple de securite ayant au moins trois feuilles separées**
Mehrfachsicherheitsverglasung mit mindestens drei separaten Scheiben
Multiple security glazing comprising at least three separate layers

(30) Priorité: 22.11.1999 FR 9914675
(43) Date de publication de la demande: 23.05.2001
(73) Titulaire: SAINT-GOBAIN GLASS FRANCE, 92400 Courbevoie (FR)
(72) Inventeur: Bonnet, Jean-Louis, 6224 Wanfercee-Baulet (BE); Lehmann, Yves, 5310 Liernu (BE)
(74) Mandataire: Muller, René

(56) Documents cités:
- WO-A-96/33334
- WO-A-98/34521

## Description

La présente invention a trait à des vitrages multiples du type décrit par exemple dans le brevet FR 2 621 501, comportant deux feuilles de verre, notamment de verre flotté trempé, reliées l'une à l'autre par l'intermédiaire d'un cadre entretoise rigide dont l'épaisseur détermine celle de la lame d'air séparant les deux feuilles de verre. Le cadre entretoise est en général collé à chacune des deux feuilles de verre par un élastomère tel que le caoutchouc butyle étanche à la vapeur d'eau, la gorge périphérique délimitée par le cadre entretoise et les deux feuilles de verre recevant un mastic étanche à l'eau liquide, notamment en polysulfure ou polyuréthane. La lame d'air est fréquemment mise en communication avec un agent dessicant associé par exemple au cadre entretoise selon divers modes connus.

L'invention vise à suppléer à la résistance aux chocs limitée des feuilles de verre habituellement employées dans les vitrages multiples. En effet, certains chocs peuvent avoir pour conséquence le bris de la feuille de verre située du côté de l'impact, puis le bris de l'autre feuille de verre. Aucun obstacle à la pénétration dans le bâtiment ou le véhicule ne subsiste alors. L'invention s'attache d'autre part à l'élaboration d'une structure de vitrage multiple, mais également d'une structure comparable mais non transparente, procurant une résistance améliorée aux impacts de balles, éclats ou tous autres projectiles notamment issus d'armes à feu.

A cet effet, l'invention a pour objet un assemblage d'au moins trois feuilles en positions sensiblement parallèles, deux feuilles extérieures et une feuille intermédiaire de dimensions inférieures et inscrite à l'intérieur du volume délimité par lesdites deux feuilles extérieures. L'assemblage se distingue selon l'invention par le fait que les parties marginales des deux faces principales de ladite feuille intermédiaire sont sensiblement solidaires d'un premier, respectivement d'un second éléments rigidifiants qui présentent chacun au moins une discontinuité, sont en contact avec l'une, respectivement avec l'autre des deux feuilles extérieures et sont susceptibles de glisser sur la surface de ces dernières. Cet assemblage autorise le maintien en place de la feuille intermédiaire en cas de bris d'une des deux feuilles extérieures, voire des deux, par l'effet du pincement d'une partie marginale de la feuille intermédiaire incluant les éléments rigidifiants, par des parties marginales des feuilles extérieures la recouvrant, ces parties marginales étant elles-mêmes maintenues ensemble éventuellement avec serrage plus ou moins important par un moyen approprié. Ainsi des chocs violents et/ou répétés peuvent aboutir au bris de la première feuille extérieure directement exposée aux chocs puis de la seconde feuille extérieure à travers la feuille intermédiaire, notamment lorsque pour cette dernière est choisi un matériau suffisamment flexible et résistant aux chocs, lui permettant de préserver son intégrité. Il est remarqué que l'aptitude de la feuille intermédiaire à résister à une déformation par enfoncement en flexion est recherchée et est liée avec sa capacité d'absorption des chocs. D'autre part un tel enfoncement s'accompagne d'un déplacement des parties marginales de la feuille intermédiaire vers sa partie centrale. L'invention autorise à la fois un tel déplacement et un maintien en place de la feuille intermédiaire.

L'assemblage de l'invention offre également la possibilité de sélectionner des natures de feuilles extérieures et de feuille intermédiaire, en particulier leur matériau, leur structure feuilletée ou monolithique, aptes à coopérer de manière synergique dans la résistance balistique.

Lesdits premier et second éléments rigidifiants peuvent consister en simples segments de baguettes rigides fixés mécaniquement ou collés aux parties marginales de chacune des deux faces principales de la feuille intermédiaire. Les discontinuités des éléments rigidifiants prévues selon l'invention suppléent aux dilatations différentes des matériaux constituant la feuille intermédiaire d'une part, les éléments rigidifiants d'autre part dans les conditions atmosphériques auxquelles est soumis l'assemblage.

Selon un mode de réalisation de l'invention particulièrement simple et pratique, les bords de l'ensemble constitué de la feuille intermédiaire et des premier et second éléments rigidifiants sont inscrits à l'intérieur d'un cadre entretoise rigide pour les deux feuilles extérieures et sont distants de ce cadre entretoise de façon à permettre un mouvement de la feuille intermédiaire selon son plan principal par rapport aux deux feuilles extérieures, et tout au moins d'une distance compatible avec les dilatations différentes des matériaux constitutifs de la feuille intermédiaire d'une part, des feuilles extérieures d'autre part, dans les conditions atmosphériques auxquelles est soumis l'assemblage.

De préférence, l'une des deux feuilles extérieures et la feuille intermédiaire d'une part, la feuille intermédiaire et l'autre des deux feuilles extérieures d'autre part, sont distantes de 1 à 50 mm. Elles sont alors notamment séparées par une lame d'air, couramment présente dans les vitrages multiples par exemple.

Comme indiqué ci-dessus, les assemblages transparents ont été envisagés de manière privilégiée dans la conception de l'invention.

Ainsi, chacune des deux feuilles extérieures est constituée de préférence d'une feuille de verre monolithique ou d'un feuilleté comprenant au moins une feuille de verre. De même un bon choix pour le matériau de la feuille intermédiaire est une matière plastique, notamment transparente, telle que polycarbonate, polymère acrylique (poly(méthacrylate de méthyle)...), poly(chlorure de vinyle), polyoléfine, polyester (poly(téréphtalate d'éthylène), poly(téréphtalate de butylène)...), polyuréthane, polyvinylbutyral, copolymère éthylène/acétate de vinyle, copolymère cyclooléfinique du type éthylène/norbornène ou éthylène/cyclopentadiène, résine ionomère, par exemple un copolymère éthylène/acide (méth)acrylique neutralisé par une polyamine, ces composés se trouvant seuls ou en mélanges, et copolymères obtenus à partir des monomères précurseurs de ceux-ci, tels que copolymère polycarbonate/polyester. Cette matière plastique sera en outre sélectionnée selon les propriétés recherchées parmi lesquelles la résistance aux chocs et la résistance en flexion peuvent être citées comme essentielles.

Ont par ailleurs été mises en oeuvre avec profit par les inventeurs, en tant que ladite feuille intermédiaire, des structures feuilletées ou encore des structures du type de celle d'un vitrage multiple ne comportant, dans chaque cas, que des feuilles de matière plastique telle que mentionnée ci-dessus. A titre d'exemple peuvent être mentionnées deux feuilles de polycarbonate collées par une couche adhésive intercalaire de polyuréthane, d'une part, et deux feuilles de polycarbonate séparées par une lame d'air et maintenues à distance l'une de l'autre par tout moyen classique tel qu'un cadre et/ou un joint périphériques, d'autre part.

L'épaisseur des feuilles de verre utilisées sous forme monolithique ou dans des feuilletés est de l'ordre de 1 à 100 mm, de préférence de 2 à 30 mm et plus particulièrement de 3 à 15 mm.

L'épaisseur de chaque feuille de matière plastique est avantageusement comprise entre 0,5 et 35 mm, de préférence entre 2 et 20 mm.

Conformément à un mode de réalisation courant de l'assemblage de l'invention, sa périphérie présente des sommets dans les zones desquels lesdits premier et second éléments rigidifiants sont discontinus. Ainsi, dans le cas d'un assemblage rectangulaire, chacun des premier et second éléments rigidifiants peut être constitué aux quatre angles de deux éléments disjoints, non soudés, qui forment par exemple un biseau présentant un jeu suffisant pour compenser le retrait maximal possible de la feuille intermédiaire.

Selon une variante particulièrement intéressante et aisée dans sa mise en oeuvre, les premier et second éléments rigidifiants consistent en éléments à section en U dans lesquels s'emboîtent les bords de la feuille intermédiaire ; en d'autres termes les premier et second éléments rigidifiants sont réunis dans ce cas en un seul élément comportant bien entendu plusieurs parties, du fait que les premier et second éléments rigidifiants présentent chacun au moins une discontinuité, conformément à l'invention et comme précisé ci-dessus.

L'invention a également pour objets des vitrages multiples pour bâtiment ou véhicule de transport, comprenant un assemblage tel que décrit précédemment, et ayant des propriétés anti-pénétration et/ou de résistance balistique.

D'autres caractéristiques et avantages de l'invention apparaîtront dans la description des dessins annexés dans lesquels :
- la figure 1 est une vue schématique partielle en coupe d'un vitrage anti-effraction selon l'invention ;
- la figure 2 est une vue schématique partielle en coupe d'un vitrage à résistance balistique conforme à l'invention.

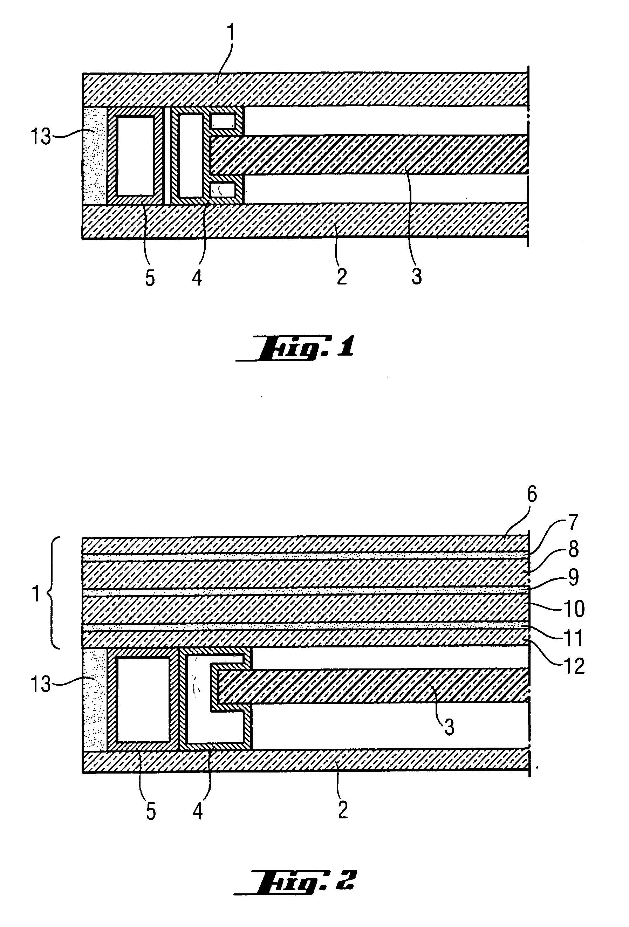

Le vitrage anti-effraction et anti-pénétration de la figure 1 comprend deux feuilles extérieures 1 et 2 identiques en verre flotté trempé silico-sodo-calcique de 4 mm d'épaisseur et une feuille intermédiaire 3 en polycarbonate de 4 mm d'épaisseur. Toute nature de polycarbonate convient pour l'obtention des effets recherchés selon l'invention ; un polycarbonate standard quelconque est donc utilisé ici.

Les premier et second éléments rigidifiants définis ci-dessus sont réunis sous la forme d'un unique profilé 4 en U en aluminium creux. Les bords de la feuille 3 sont emboîtés à l'intérieur de ce profilé en U auquel ils sont solidement fixés par collage. La surface principale du vitrage représenté est un rectangle de 65 cm x 50 cm. Un élément de profilé 4 est collé à chacun des quatre côtés du rectangle, deux éléments voisins étant disjoints de telle manière qu'ils forment à chacun des quatre sommets du rectangle un biseau présentant un jeu de 2 mm.

Le profilé 4 est en contact direct avec les surfaces principales des feuilles 1 et 2 en vis-à-vis, sur lesquelles il est susceptible de glisser.

Les feuilles extérieures 1 et 2 sont collées l'une à l'autre par l'intermédiaire d'un cadre entretoise 5 rigide consistant en un profilé en aluminium creux à section rectangulaire de hauteur sensiblement identique à celle du profilé 4. En tant que colles employées aux interfaces entre le cadre 5 d'une part, les feuilles 1 et 2 d'autre part, on préfère un élastomère notamment le caoutchouc butyle étanche à la vapeur d'eau. Le cadre entretoise 5 est monté distant de 1,8 mm du profilé 4 ce qui, compte tenu des dimensions du vitrage, est suffisant pour compenser les dilatations différentes pouvant être observées pour les feuilles de verre d'une part, la feuille de polycarbonate d'autre part.

La gorge périphérique délimitée par les deux feuilles extérieures 1 et 2 et le cadre entretoise 5 est au moins en partie remplie d'un mastic d'étanchéité 13 réticulable, consistant avantageusement en un polysulfure ou polyuréthane étanche à l'eau liquide.

Les lames d'air séparant la feuille intermédiaire 3 en polycarbonate de chacune des feuilles extérieures 1 et 2 ont une épaisseur identique de 5,5 mm. Un cadre extérieur non représenté recouvre une partie périphérique du vitrage en s'étendant de 2 cm au-delà du profilé 4 vers le centre de la surface principale du vitrage. En cas de bris d'une des deux feuilles extérieures 1 ou 2, la feuille 3 en polycarbonate est apte à absorber un choc avec déformation en flexion éventuelle et glissement du profilé 4 entre des parties périphériques des feuilles 1 et 2 recouvertes par ledit cadre extérieur.

En comparaison avec un vitrage ne se différenciant de celui qui vient d'être décrit que par l'absence de la feuille intermédiaire 3, le vitrage représenté en Figure 1 s'avère très efficace pour retarder une pénétration à travers la baie, quel que soit le moyen d'impact utilisé. La durée d'une telle opération est au moins multipliée par trois ce qui peut être considéré comme dissuasif.

Le vitrage représenté sur la figure 2 a une structure différente lui conférant une résistance balistique. Il se distingue de celui décrit précédemment en référence à la figure 1 par les éléments suivants.

La feuille intermédiaire 3 est une feuille de polycarbonate standard de 12,5 mm d'épaisseur. Les lames d'air la séparant de la feuille extérieure 1, respectivement de la feuille extérieure 2 ont pour épaisseurs 6 mm, respectivement 16 mm.

La feuille extérieure 1 est un feuilleté de quatre feuilles de verre 6, 8, 10 et 12 d'épaisseurs respectives 4 mm, 8 mm, 8 mm et 4 mm reliées les unes aux autres par trois couches adhésives intercalaires 7, 9 et 11 de polyvinylbutyral de 0,76 mm d'épaisseur. Ce vitrage est conçu pour résister à un tir de balle du côté du feuilleté 1, de telle sorte que pour de nombreux calibres connus, la feuille extérieure 2 préserve son intégrité. Dans cette application pare-balles également, le montage à glissement de la feuille intermédiaire 3 vis-à-vis des feuilles extérieures 1 et 2 permet de tirer au mieux parti de la résistance à l'enfoncement du polycarbonate et de sa capacité d'absorption des chocs.

L'invention met donc à disposition un vitrage multiple, au moins triple, présentant des propriétés anti-effraction/anti-pénétration et/ou de résistance balistique excellentes eu égard à sa légèreté. Il n'est cependant nullement exclu d'utiliser l'assemblage de l'invention comme partie d'une structure plus complexe, obtenue notamment par adjonction de feuilles et/ou feuilletés supplémentaires en divers matériaux, notamment métalliques, sans sortir du cadre de l'invention.

Le document WO-A-9834521 a trait à des vitrages multiples et vise (cf page 1.lignes 22-26) principalement à garantir l'étanchéité du vitrage et éventuellement à améliorer la résistance aux chocs (shatter or bullet resistant).

Ce document (voir figure 3) divulgue un assemblage (2) d'au moins trois feuilles en positions sensiblement parallèles, deux feuilles extérieures (3, 4) et une feuille intermédiaire (5) de dimensions inférieures et inscrite à l'intérieur du volume délimité par lesdites deux feuilles extérieures. Les parties marginales des deux faces principales de ladite feuille intermédiaire (5) sont sensiblement solidaires d'éléments réunis en un «U».

Les éléments en U (9) sont en caoutchouc butyl (voir page 5, ligne 14) et ne sont ni décrits ni susceptibles d'être des rigidifiants. Ils ne présentent pas au moins une discontinuité. Ils sont en contact avec l'une, respectivement avec l'autre desdites deux feuilles extérieures (3, 4), et en outre sont chacun fixés (voir page 5, lignes 5-6) sur une feuille extérieure (3, 4) et donc non susceptibles de glisser sur la surface de ces dernières.

## Revendications

1. Assemblage d'au moins trois feuilles en positions sensiblement parallèles, deux feuilles extérieures (1, 2) et une feuille intermédiaire (3) de dimensions inférieures et inscrite à l'intérieur du volume délimité par lesdites deux feuilles extérieures (1, 2), **caractérisé en ce que** les parties marginales des deux faces principales de ladite feuille intermédiaire (3) sont sensiblement solidaires d'un premier, respectivement d'un second éléments rigidifiants (4), qui présentent chacun au moins une discontinuité, sont en contact avec l'une, respectivement avec l'autre desdites deux feuilles extérieures (1, 2) et sont susceptibles de glisser sur la surface de ces dernières.

2. Assemblage selon la revendication 1, **caractérisé en ce que** les bords de ladite feuille intermédiaire (3) prolongés desdits premier et second éléments rigidifiants (4) sont inscrits à l'intérieur d'un cadre entretoise (5) rigide pour lesdites deux feuilles extérieures (1, 2) et en sont distants de façon à au moins compenser les dilatations différentes des matériaux constitutifs de ladite feuille intermédiaire (3) d'une part, desdites deux feuilles extérieures (1,2) d'autre part, dans les conditions atmosphériques auxquelles est soumis l'assemblage.

3. Assemblage selon la revendication 1 ou 2, **caractérisé en ce que** l'une desdites deux feuilles extérieures (1, 2) et ladite feuille intermédiaire (3) d'une part, ladite feuille intermédiaire (3) et l'autre desdites deux feuilles extérieures (2, 1) d'autre part, sont distantes de 1 à 50 mm.

4. Assemblage selon l'une des revendications 1 à 3, **caractérisé en ce que** chacune desdites deux feuilles extérieures (1, 2) est constituée d'une feuille de verre monolithique ou d'un feuilleté comprenant au mois une feuille de verre.

5. Assemblage selon l'une des revendications 1 à 4, **caractérisé en ce que** ladite feuille intermédiaire (3) est en matière plastique telle que polycarbonate, polymère acrylique, poly(chlorure de vinyle), polyoléfine, polyester, polyuréthane, polyvinylbutyral, copolymère éthylène/acétate de vinyle, copolymère cyclooléfinique, résine ionomère, seuls ou en mélanges, et copolymères obtenus à partir des monomères précurseurs de ceux-ci.

6. Assemblage selon l'une des revendications 1 à 5, **caractérisé en ce que** sa périphérie présente des sommets dans les zones desquels lesdits premier et second éléments rigidifiants (4) sont discontinus.

7. Assemblage selon l'une des revendications 1 à 6, **caractérisé en ce que** lesdits premier et second éléments rigidifiants (4) consistent en éléments à section en U dans lesquels s'emboîtent les bords de ladite feuille intermédiaire (3).

8. Assemblage selon l'une des revendications 1 à 7, **caractérisé en ce qu'**un cadre entretoise (5) rigide pour lesdites deux feuilles extérieures (1, 2) est collé à chacune de celles-ci au moyen d'un élastomère tel que le caoutchouc butyle, et **en ce que** la gorge périphérique délimitée par lesdites deux feuilles extérieures (1, 2) et ledit cadre entretoise (5) contient un mastic d'étanchéité (13) réticulable tel que polysulfure ou polyuréthane.

9. Vitrage multiple anti-pénétration pour bâtiment ou véhicule de transport, comprenant un assemblage selon l'une des revendications 1 à 8.

10. Vitrage multiple à résistance balistique pour bâtiment ou véhicule de transport, comprenant un assemblage selon l'une des revendications 1 à 8.

## Claims

1. Assembly comprising at least three panes in substantially parallel positions, namely two outer panes (1, 2) and an intermediate pane (3) of smaller dimensions and located inside the volume bounded by said two outer panes (1, 2), **characterized in that** the marginal portions of the two main faces of said intermediate pane (3) are substantially fastened to respective first and second stiffening elements (4), each having at least one discontinuity, are in contact with one of said two outer panes (1, 2) and with the other, respectively, and are capable of sliding over the surface of said outer panes.

2. Assembly according to Claim 1, **characterized in that** the edges of said intermediate pane (3), which are extended by said first and second stiffening elements (4), are located inside a rigid spacer frame (5) for said two outer panes (1, 2) and are away from the spacer frame so at least to compensate for the different expansions of the constituent materials of, on the one hand, said intermediate pane (3) and, on the other hand, of said two outer panes (1, 2) under the atmospheric conditions to which the assembly is subjected.

3. Assembly according to Claim 1 or 2, **characterized in that**, on the one hand, one of said two outer panes (1, 2) and said intermediate pane (3) and, on the other hand, said intermediate pane (3) and the other of said two outer panes (2, 1) are from 1 to 50 mm apart.

4. Assembly according to one of Claims 1 to 3, **characterized in that** each of said two outer panes (1, 2) consists of a monolithic glass pane or a laminate comprising at least one glass pane.

5. Assembly according to one of Claims 1 to 4, **characterized in that** said intermediate pane (3) is made of a plastic such as polycarbonate, acrylic polymer, polyvinyl chloride, polyolefin, polyester, polyurethane, polyvinyl butyral, ethylene/vinyl acetate copolymer, cycloolefin copolymer, ionomer resin, either by themselves or as blends, and copolymers obtained from the precursor monomers thereof.

6. Assembly according to one of Claims 1 to 5, **characterized in that** its periphery has vertices in the regions from which said first and second stiffening elements (4) are discontinuous.

7. Assembly according to one of Claims 1 to 6, **characterized in that** said first and second stiffening elements (4) consist of elements with a U-shaped cross section into which the edges of said intermediate pane (3) fit.

8. Assembly according to one of Claims 1 to 7, **characterized in that** a rigid spacer frame (5) for said two outer panes (1, 2) is bonded to each of them by means of an elastomer, such as butyl rubber, and **in that** the peripheral groove bounded by said two outer panes (1, 2) and said spacer frame (5) contains a crosslinkable sealing mastic (13), such as polysulfide or polyurethane.

9. Anti-break-in multiple glazing for buildings or transport vehicles, comprising an assembly according to one of Claims 1 to 8.

10. Ballistic multiple glazing for buildings or transport vehicles, comprising an assembly according to one of Claims 1 to 8.

## Patentansprüche

1. Aufbau aus mindestens drei Scheiben in im Wesentlichen paralleler Position, zwei Außenscheiben (1, 2) und einer Innenscheibe (3), deren Abmessungen kleiner sind und welche in das Volumen einbeschrieben ist, das von den zwei Außenscheiben (1, 2) begrenzt wird, **dadurch gekennzeichnet, dass** die Randbereiche der zwei Hauptflächen der Zwischenscheibe (3) mit einem ersten bzw. einem zweiten Versteifungselement (4) im Wesentlichen fest verbunden sind, die jeweils mindestens eine Unterbrechung aufweisen, sich mit der einen bzw. der anderen der zwei Außenscheiben (1, 2) in Berührung befinden und in der Lage sind, auf deren Oberfläche zu gleiten.

2. Aufbau nach Anspruch 1, **dadurch gekennzeichnet, dass** die Ränder der Zwischenscheibe (3), die von dem ersten und dem zweiten Versteifungselement (4) verlängert werden, in einen steifen Querrahmen (5) für die zwei Außenscheiben (1, 2) einbeschrieben und dort derart voneinander beabstandet sind, dass sie die verschiedenen Dehnungsvorgänge der Materialien, die einerseits die Zwischenscheibe (3) und andererseits die zwei Außenscheiben (1, 2) bilden, unter den atmosphärischen Bedingungen, welchen dieser Aufbau ausgesetzt ist, wenigstens kompensieren.

3. Aufbau nach Anspruch 1 oder 2, **dadurch gekennzeichnet, dass** einerseits eine der zwei Außenscheiben (1, 2) und die Zwischenscheibe (3) und andererseits die Zwischenscheibe (3) und die andere der zwei Außenscheiben (2, 1) einen Abstand von 1 bis 50 mm haben.

4. Aufbau nach einem der Ansprüche 1 bis 3, **dadurch gekennzeichnet, dass** jede der zwei Außenscheiben (1, 2) von einer monolithischen Glasscheibe oder einer Verbundglasscheibe, die mindestens eine Glasscheibe umfasst, gebildet wird.

5. Aufbau nach einem der Ansprüche 1 bis 4, **dadurch gekennzeichnet, dass** die Zwischenscheibe (3) aus einem Kunststoff wie Polycarbonat, Acrylpolymer, Polyvinylchlorid, Polyolefin, Polyester, Polyurethan, Polyvinylbutyral, Ethylen-Vinylacetat-Copolymer, cycloolefinisches Copolymer, Ionomerharz allein oder im Gemisch und aus Vorläufermonomeren davon erhaltenen Copolymeren besteht.

6. Aufbau nach einem der Ansprüche 1 bis 5, **dadurch gekennzeichnet, dass** sein Umfang Erhebungen in den Bereichen aufweist, in welchen das erste und das zweite Versteifungselement (4) diskontinuierlich sind.

7. Aufbau nach einem der Ansprüche 1 bis 6, **dadurch gekennzeichnet, dass** das erste und das zweite Versteifungselement (4) aus Elementen mit U-Querschnitt bestehen, in welche die Ränder der Zwischenscheibe (3) eingefügt sind.

8. Aufbau nach einem der Ansprüche 1 bis 7, **dadurch gekennzeichnet, dass** ein steifer Querrahmen (5) für die zwei Außenscheiben (1, 2) mittels eines Elastomers wie Butylkautschuk auf jede davon geklebt ist, und dass die Umfangsnut, die von den zwei Außenscheiben (1, 2) und dem Querrahmen (5) begrenzt wird, einen vernetzbaren Dichtungskitt (13) wie Polysulfid oder Polyurethan enthält.

9. Durchbruchhemmende Mehrfachverglasung für Gebäude oder Transportfahrzeuge, die einen Aufbau nach einem der Ansprüche 1 bis 8 umfasst.

10. Durchschusshemmende Mehrfachverglasung für Gebäude oder Transportfahrzeuge, die einen Aufbau nach einem der Ansprüche 1 bis 8 umfasst.
